Europäisches Patentamt

European Patent Office

Office européen des brevets

(11) Veröffentlichungsnummer: **0 362 754**

**A1**

(19)

(12) **EUROPÄISCHE PATENTANMELDUNG**

(21) Anmeldenummer: 89118208.1

(51) Int. Cl.⁵: **A01F 15/08**

(22) Anmeldetag: 02.10.89

(30) Priorität: 06.10.88 DE 3833988

(43) Veröffentlichungstag der Anmeldung:
11.04.90 Patentblatt 90/15

(84) Benannte Vertragsstaaten:
AT BE CH DE ES FR GB GR IT LI LU NL SE

(71) Anmelder: **Greissinger, Erwin**
**Heinz-Neidhardt-Ring 22**
**D-8564 Velden(DE)**

(72) Erfinder: **Greissinger, Erwin**
**Heinz-Neidhardt-Ring 22**
**D-8564 Velden(DE)**

(74) Vertreter: **Brose, Manfred, Dr.**
**Pellergasse 45**
**D-8500 Nürnberg 50(DE)**

(54) **Silageballenwickler.**

(57) Ein Silageballenwickler ( 1 ), insbesondere als Anbaugerät an einem Schlepper, besteht aus einer bodenparallelen Einrichtung ( 3 ) zur Aufnahme eines mit der Mantelfläche ( 61 ) auf dem Boden aufliegenden Silageballens ( 6 ) vom Boden und zur Lagerung und Drehung des Ballens ( 6 ) um seine Zylinderachse ( 62 ), einem sich parallel oberhalb der Aufnahmeeinrichtung ( 3 ) über diese erstreckenden Träger ( 21 ), an dem ein rechtwinkeliger Dreharm ( 4 ) mit einem Schenkel ( 41 ) drehbar gelagert ist, wobei am anderen senkrechten Schenkel ( 42 ) eine Folienrolle ( 44 ) zum Umwickeln des Silageballens ( 6 ) drehbar gelagert ist. Die Aufnahmeeinrichtung ( 3 ) besteht aus einer die zylindrischen Mantelfläche ( 61 ) des Silageballens ( 6 ) von unten umfassenden, im Querschnitt kreisabschnittsförmigen Mulde ( 31 ), wobei die Mulde ( 31 ) aus n zylindrischen, im Querschnitt gesehen auf einem Kreisbogen liegenden und an der Mantelfläche ( 61 ) des Ballens ( 6 ) in Längsrichtung anliegenden drehbaren Rundstäben ( 32 ) besteht, die den Ballen ( 6 ) an n achsenparallelen Linien der Mantelfläche ( 61 ) abstützen.

Fig. 1

Die Erfindung betrifft einen Silageballenwickler, insbesondere als Anbaugerät für die Dreipunktaufhängung eines Schleppers.

Es sind Silageballenwickler bekannt, die aus einem an der Dreipunktaufhängung eines Schleppers zu befestigenden Grundrahmen bestehen. An der bodennahen Unterkante des Grundrahmens ist eine auf dem Grundrahmen senkrecht stehende, bodenparallele Einrichtung zur Aufnahme eines mit der Mantelfläche auf dem Boden aufliegenden Silageballens vom Boden und zur Lagerung und Drehung des Ballens um seine Zylinderachse angeordnet. An der Oberkante des Grundrahmens ist ein gleichfalls auf diesem senkrecht stehender und sich parallel zu der Aufnahmeeinrichtung über dieser erstreckender Träger angeordnet, an dessen zur Aufnahmeeinrichtung hin orientierter Unterseite ein rechtwinkeliger Dreharm mit einem Schenkel gelagert ist und wobei am anderen, zum Grundrahmen parallelen Schenkel des Dreharmes eine Folienrolle gelagert ist, so daß bei einer umlaufenden Drehbewegung des Dreharmes um den sich um seine Zylinderachse drehenden Ballen herum, die Folie sich von der Rolle abwickelt und den Ballen umwickelt. Die Aufnahmeeinrichtung besteht bei diesem bekannten Silageballenwickler aus zwei Armen, mit denen der zylinderförmige Ballen wie von einem Gabelstabler aufgenommen wird. Die beiden Arme werden parallel zur Ballenzylinderachse unter den Ballen geschoben und angehoben. Die Arme sind als drehbare Zylinder ausgebildet, so daß der auf den beiden Armen liegende Silageballen um seine Zylinderachse gedreht werden kann. Dieser Aufnahmeeinrichtung haftet jedoch der Nachteil an, daß sich der Silageballen unter seinem eigenen Gewicht, besonders zu Beginn des Wickelvorganges, zwischen den beiden Armen hindurchdrückt, seine Zylinderform verliert und nicht mehr drehbar ist.

Der Erfindung liegt daher die Aufgabe zugrunde, eine Aufnahmeeinrichtung für einen Silageballenwickler zu schaffen, bei der nicht die Gefahr besteht, daß der aufgenommene Ballen seine Zylinderform verliert und um die Zylinderachse nicht mehr drehbar und umwickelbar ist.

Diese Aufgabe wird nach der Erfindung dadurch gelöst, daß die Aufnahmeeinrichtung aus einer die zylindrischen Mantelfläche des Silageballens von unten umfassenden, im Querschnitt kreisabschnittsförmigen Mulde besteht, wobei die Mulde aus n zylindrischen, im Querschnitt gesehen auf einem Kreisbogen liegenden und an der Mantelfläche des Ballens in Längsrichtung anliegenden drehbaren Rundstäben besteht, die den Ballen an n achsenparallelen Linien der Mantelfläche abstützen. Durch diese mehrfache Abstützung des Ballens in kleinen Abständen ist es völlig ausgeschlossen, daß der Ballen eingeklemmt wird, seine zylindrische Gestalt verliert und nicht umwickelt werden kann.

Vorzugsweise nimmt der Durchmesser der drehbaren Rundstäbe vom Rand zum unteren Teil der Mülde, dem aufzunehmenden Gewicht entsprechend zu.

Nach einer ersten Fortbildung ist mindestens ein Rundstab mit einem Drehantrieb versehen.

Nach einer zweiten Fortbildung ist die Mulde um eine Längsachse oder eine Querachse des Silageballenwicklers kippbar und ein Gegendruckstab seitlich neben der Mulde ausfahrbar oder ausschwenkbar.

In weiterer Ausgestaltung der Erfindung ist der Dreharm mit einem Drucksensor versehen, durch den die Drehbewegung des Dreharmes beim Auftreffen auf einen Widerstand sofort unterbrochen wird.

Gemäß einem Verfahren zur Aufnahme eines zylindrischen Silageballens durch den Silageballenwickler nach der Erfindung, wird nach Kippen der in Längsrichtung angeordneten Mulde und Ausfahren des Gegendruckstabes, ein zwischen Mulde und Gegendruckstab liegender Silageballen durch Einfahren des Gegendruckstabes in Richtung auf die gekippte Mulde gerollt, worauf nach Anliegen des Ballens in der Mulde, diese bei weiterer Druckausübung des Gegendruckstabes in ihre Ausgangsstellung zurückgekippt wird.

In den Zeichnungen ist ein Ausführungsbeispiel der Erfindung wiedergegeben. Es zeigen :

Fig. 1 eine Rückansicht des Silageballenwicklers aus Richtung des Pfeiles 1 von Figur 2 und 3 mit einem aufgenommenen Silageballen,

Fig. 2 eine Seitenansicht aus Richtung des Pfeiles II von Figur 1 ohne Silageballen,

Fig. 3 eine Ansicht nach der Schnittlinie III - III von Figur 2 ohne Silageballen und

Fig. 4 eine Rückansicht wie Figur 1, jedoch mit dem Silageballen in Aufnahmestellung.

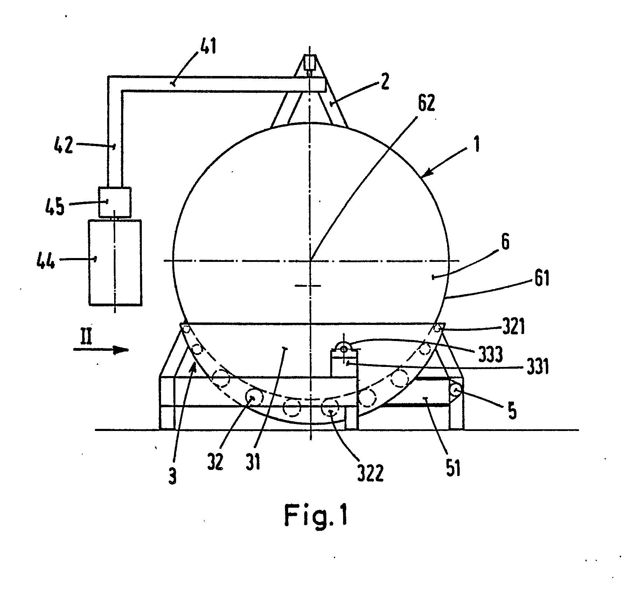

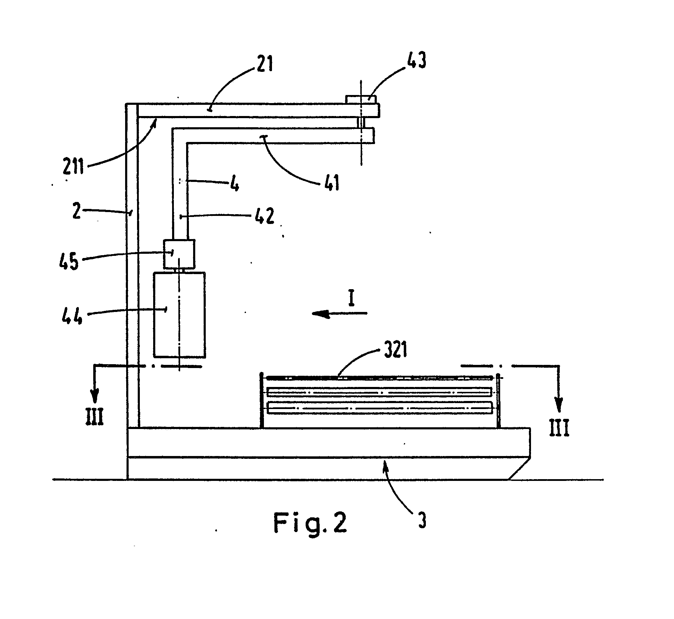

Figur 1 zeigt eine Rückansicht und Figur 2 eine Seitenansicht des Silageballenwicklers 1. Der Wickler 1 ist in diesem Beispiel als Anbaugerät für die Dreipunktaufhängung eines in den Zeichnungen nicht wiedergegebenen Schleppers ausgebildet. Für die Dreipunktaufhängung besitzt der Silageballenwickler 1 einen Grundrahmen 2, an dessen bodennaher Unterkante eine auf dem Grundrahmen 2 senkrecht stehende bodenparallele Einrichtung 3 zur Aufnahme eines mit der Mantelfläche 61 auf dem Boden aufliegenden Silageballens 6 vom Boden und zur Lagerung und Drehung des Ballens 6 um seine Zylinderachse 62 angeordnet ist. An der Oberkante des Grundrahmens 2 ist ein auf dem Grundrahmen 2 senkrecht stehender und sich parallel zu der Aufnahmeeinrichtung 3 über diese erstreckender Träger 21 angeordnet. An der zur Aufnahmeeinrichtung 3 hin orientierten Unterseite 211 des Trägers 21 ist ein rechtwinkeliger Dreharm 4 mit einem Schenkel 41 drehbar gelagert. Die Drehung erfolgt durch einen Antrieb 43, der elektrisch, mechanisch oder hydraulisch sein kann. Am anderen, zum Grundrahmen 2 parallelen Schenkel 42 des Dreharmes 4 ist eine Folienrolle 44 mit einer in ihrer Bremskraft einstellbaren Abwickelbremse 45 gelagert. Durch die Einstellung der Abwickelbremse 45 ist es möglich, die Spannung, mit der die Folie um den Silageballen 6 gewickelt wird, nach Wunsch einzustellen. Außerdem kann der Dreharm 4 mit einem Drucksensor versehen sein, durch den die Drehbewegung des Dreharmes 4 beim Auftreffen auf einen Widerstand sofort unterbrochen wird. Hierdurch werden Verletzungen der Bedienungspersonen sicher vermieden.

Die Aufnahmeeinrichtung 3 für den Silageballen 6 besteht aus einer die zylindrische Mantelfläche 61 des Silageballens 6 von unten umfassenden, im Querschnitt kreisabschnittsförmigen Mulde 31. Die Mulde 31 wird aus n, im Querschnitt gesehen auf einem Kreisbogen liegenden und an der Mantelfläche 61 des Silageballens 6 in Längsrichtung anliegenden drehbaren Rundstäben 32 gebildet. In den Figuren sind als Ausführungsbeispiel zehn Rundstäbe 32 wiedergegeben. Es versteht sich jedoch, daß jede andere Anzahl an Rundstäben 32 nach Wunsch möglich ist. Auch eine ungerade Anzahl an Stäben 32 ist möglich, wobei in diesem Fall der stärkste Stab im unteren Scheitelpunkt zu liegen kommt. Die n Rundstäbe 32 stützen den Ballen 6 an n achsenparallelen Linien der Mantelfläche 61 ab. Der Abstand zwischen jeweils zwei Stäben ist so gering, daß ein Hindurchdrücken oder Verformen des Silageballens 2 während der Aufnahme und nach der Aufnahme, während der Drehung um die Zylinderachse 62 unmöglich ist. Wie aus Figur 1 zu ersehen ist, kann der Durchmesser der drehbaren Rundstäbe 32 vom Randstab 321 zum Bodenstab 322 zunehmen.

Mindestens ein Rundstab 32 ist mit einem Drehantrieb versehen, der mechanisch, hydraulisch oder elektrisch sein kann. Hierdurch wird der Silageballen 6 um seine Zylinderachse 62 herum gedreht.

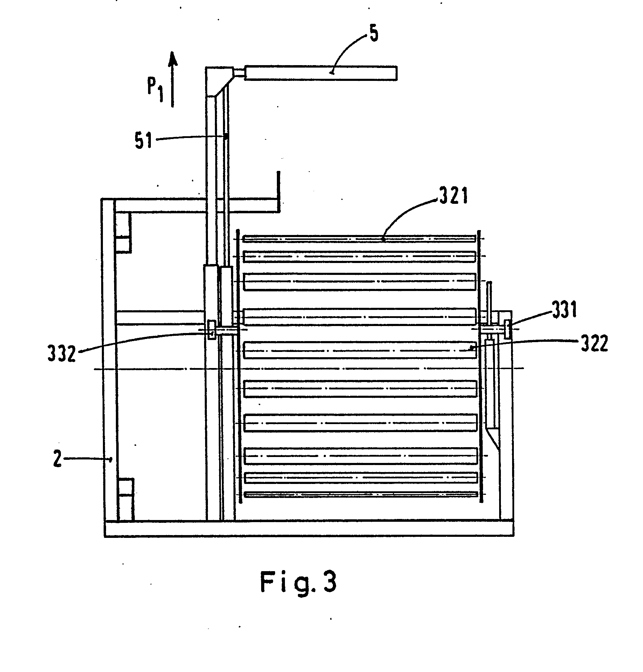

Zum Aufnehmen eines Silageballens 6, der auf seiner Mantelfläche 61 auf dem Boden aufliegt, ist die Mulde 31 in dem in den Figuren 1 bis 4 wiedergegebenen Beispiel um eine parallel zur Längsachse des Silageballenwicklers 1 liegende Kippachse 333 kippbar. Hierfür ist die Mulde 31 an zwei Kipplagern 331, 332 kippbar gelagert, von denen sich wie aus Figur 3 zu ersehen ist auf jeder Seite der Mulde 31 ein Kipplager befindet.

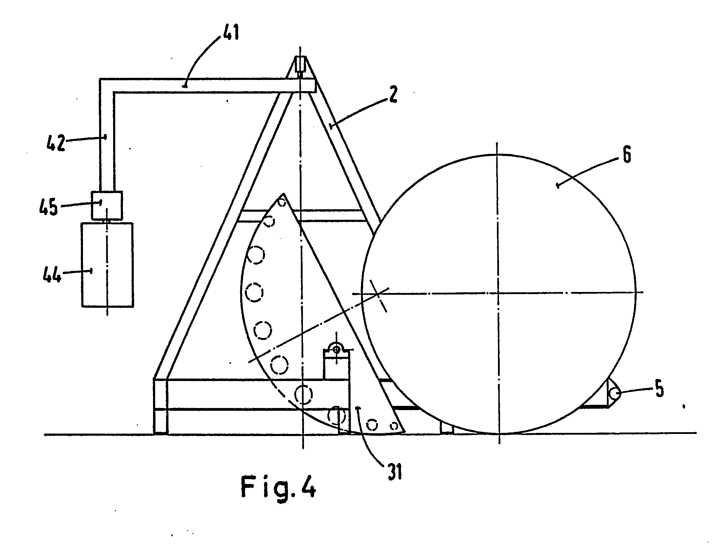

Ferner besteht die Aufnahmeeinrichtung 3 aus einem Gegendruckstab 5, der an einem ausfahrbaren Träger 51 gelagert ist. Der Gegendruckstab 5 ist um seine Längsachse drehbar, damit er an der Mantelfläche 61 des gerollten Silageballens 6 abrollen kann. Wenn die Mulde 3 zur Aufnahme eines Silageballens 6 gekippt ist, wird der Gegendruckstab 5 in Richtung des Pfeiles P1 (Figur 3) ausgefahren. Sodann wird der Silageballenwickler 1 in Bezug auf einen Silageballen 6 in die Stellung gebracht, daß der Ballen 6, wie in Figur 4 wiedergegeben ist, zwischen die gekippte Mulde 31 und den Gegendruckstab 5 zu liegen kommt. Durch Einfahren des Gegendruckstabes 5 in eine zum Pfeil P1 entgegengesetzte Richtung, wird der Silageballen 6 in Richtung auf die Mulde 31 gerollt, worauf nach Anliegen des Ballens 6 in der Mulde 31, diese bei weiterer Druckausübung des Gegendruckstabes 5 in ihre Ausgangsstellung zurückgekippt wird.

In dem vorstehend beschriebenen Beispiel ist die Mulde 31 um eine parallel zur Längsachse des Silageballenwicklers 1 liegende Kippachse 333 kippbar. Es ist aber auch möglich, die Mulde 31 mit ihrer Kippachse 333 quer zur Längsachse des Silageballenwicklers 1 anzuordnen. In diesem Fall kann mit dem Schlepper die Mulde 31 soweit an den Silageballen 6 herangefahren werden, daß der Ballen 6 an der Mulde 31 zur Anlage kommt. Ein sodann von oben über den Silageballen 6 zu schwenkender, vorzugsweise rechteckiger Überschlagbügel sichert diese Anlage, so daß die Mulde 31 sofort zurückgekippt werden kann und hierbei den Silageballen 6 aufnimmt. Der rechteckige Überschlagbügel kann mechanisch, hydraulisch, elektrisch, aber auch manuell betätigt werden.

Grundsätzlich ist es möglich, den Silageballenwickler 1 als Standgerät oder als Zuggerät mit oder ohne Antrieb durch Zapfwelle, Hydraulik oder Elektrik auszubilden.

Bezugszeichenliste

1 Silageballenwickler
2 Grundrahmen
21 Träger
211 Unterseite des Trägers
3 Aufnahmeeinrichtung
31 Mulde
32 Rundstäbe
321 Randstab
322 Bodenstab
33 Lager
331 Kipplager
332 Kipplager
333 Kippachse
4 Dreharm
41 Schenkel
42 Schenkel
43 Antrieb

44 Folienrolle
45 Abwickelbremse
5 Gegendruckstab
51 Träger
6 Silageballen
61 Mantelfläche
62 Zylinderachse

## Ansprüche

1. Silageballenwickler ( 1 ), insbesondere als Anbaugerät für die Dreipunktaufhängung eines Schleppers, bestehend aus einem an der Dreipunktaufhängung zu befestigenden Grundrahmen ( 2 ), an dessen bodennaher Unterkante eine auf dem Grundrahmen ( 2 ) senkrecht stehende bodenparallele Einrichtung ( 3 ) zur Aufnahme eines mit der Mantelfläche ( 61 ) auf dem Boden aufliegenden Silageballen ( 6 ) vom Boden und zur Lagerung und Drehung des Ballens ( 6 ) um seine Zylinderachse ( 62 ) angeordnet ist und einem an der Oberkante des Grundrahmens ( 2 ) auf diesem gleichfalls senkrecht stehenden und sich parallel zu der Aufnahmeeinrichtung ( 3 ) über diese erstreckenden Trägers ( 21 ), an dessen zur Aufnahmeeinrichtung ( 3 ) hin orientierten Unterseite ( 211 ) ein rechtwinkeliger Dreharm ( 4 ) mit einem Schenkel ( 41 ) drehbar gelagert ist und wobei am anderen, zum Grundrahmen ( 2 ) parallelen Schenkel ( 42 ) des Dreharmes ( 4 ) eine Folienrolle ( 44 ) gelagert ist, so daß bei einer umlaufenden Drehbewegung des Dreharmes ( 4 ) um den sich um seine Zylinderachse ( 62 ) drehenden Ballen ( 6 ) herum, die Folie sich von der Rolle ( 44 ) abwickelt und den Ballen ( 6 ) umwickelt, dadurch gekennzeichnet, daß die Aufnahmeeinrichtung ( 3 ) aus einer die zylindrischen Mantelfläche ( 61 ) des Silageballens ( 6 ) von unten umfassenden, im Querschnitt kreisabschnittsförmigen Mulde ( 31 ) besteht, wobei die Mulde ( 31 ) aus n zylindrischen, im Querschnitt gesehen auf einem Kreisbögen liegenden und an der Mantelfläche ( 61 ) des Ballens ( 6 ) in Längsrichtung anliegenden drehbaren Rundstäben ( 32 ) besteht, die den Ballen ( 6 ) an n achsenparallelen Linien der Mantelfläche ( 61 ) abstützen.

2. Silageballenwickler nach Anspruch 1, dadurch gekennzeichnet, daß der Durchmesser der drehbaren Rundstäbe ( 32 ) vom Randstab ( 321 ) zum Bodenstab ( 322 ) der Mulde ( 31 ) dem aufzunehmenden Gewicht entsprechend zunimmt.

3. Silageballenwickler nach Anspruch 1 oder 2, dadurch gekennzeichnet, daß mindestens ein Rundstab ( 32 ) mit einem Drehantrieb versehen ist.

4. Silageballenwickler nach den Ansprüchen 1 bis 3, dadurch gekennzeichnet, daß der Dreharm ( 4 ) mit einem Drucksensor versehen ist, durch den die Drehbewegung des Dreharmes ( 4 ) beim Auftreffen auf einen Widerstand sofort unterbrochen wird.

5. Silageballenwickler nach den Ansprüchen 1 bis 4, dadurch gekennzeichnet, daß die Mulde ( 31 ) um eine Kippachse ( 333 ) kippbar und ein Gegendruckstab ( 5 ) im Abstand von der Mulde ( 31 ) positionierbar ist ( Fig. 5 ).

6. Silageballenwickler nach Anspruch 5, dadurch gekennzeichnet, daß der um seine Längsachse drehbare Gegendruckstab ( 5 ) seitlich neben der Mulde ( 31 ) ausfahrbar ist.

7. Silageballenwickler nach Anspruch 5, dadurch gekennzeichnet, daß der als rechteckiger Bügel ausgebildete Gegendruckstab von oben nach unten schwenkbar ist.

8. Verfahren zur Aufnahme eines zylindrischen Silageballens durch einen Silageballenwickler nach den Ansprüchen 1 bis 6, dadurch gekennzeichnet, daß nach Kippen der in Längsrichtung angeordneten Mulde und Ausfahren des Gegendruckstabes, ein zwischen Mulde und Gegendruckstab liegender Silageballen durch Einfahren des Gegendruckstabes in Richtung auf die gekippte Mulde gerollt wird, worauf nach Anliegen des Ballens in der Mulde, diese bei weiterer Druckausübung des Gegendruckstabes in ihre Ausgangsstellung zurückgekippt wird, der Ballen die Kippbewegung mitmacht und in der Mulde zu liegen kommt.

9. Verfahren zur Aufnahme eines zylindrischen Silageballens durch einen Silageballenwickler nach den Ansprüchen 1 bis 5 und 7, dadurch gekennzeichnet, daß nach Kippen der in Querrichtung angeordneten Mulde, diese an einen Silageballen bis zur Anlage herangefahren wird, der rechteckige Bügel von oben über den Ballen bis zur Anlage an den Ballen geschwenkt wird und unter Druck an diesem anliegt, worauf die Mulde mit dem festgehaltenen Silageballen zurückgekippt wird.

Fig.1

Fig. 2

Fig.3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0110110 (MANULI) <br> * Seite 5, Zeile 15 - Seite 12, Zeile 6; Figuren 1-11 * <br><br> --- | 1, 3, 5, 8 | A01F15/08 |
| A | FR-A-2445100 (OMAS) <br> * Seite 2, Zeile 29 - Seite 5, Zeile 31; Figuren 1-9 * <br><br> --- | 1, 6, 7, 8, 9 | |
| A | EP-A-274026 (SCHENKE) <br><br> --- | | |
| A | EP-A-234763 (OIESTAD) <br><br> ----- | | |

RECHERCHIERTE
SACHGEBIETE (Int. Cl.5 )

A01F
A01D

Der vorliegende Recherchenbericht wurde für alle Patentansprüche erstellt

| Recherchenort | Abschlußdatum der Recherche | Prüfer |
|---|---|---|
| DEN HAAG | 03 JANUAR 1990 | VERMANDER R.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes
    Dokument

EPO FORM 1503 03.82 (P0403)